# EUROPÄISCHE PATENTSCHRIFT

(11) **EP 3 164 544 B1**
(45) Veröffentlichungstag und Bekanntmachung des Hinweises auf die Patenterteilung: **21.03.2018**
(21) Anmeldenummer: 15726867.3
(22) Anmeldetag: 05.06.2015
(51) Int. Cl.: E01B 27/02

(54) **VERLADEWAGEN MIT SEPARAT ANSTEUERBAREN ABWURFEINRICHTUNGEN**
HOPPER CAR HAVING SELECTABLE DISCHARGE DEVICES
WAGON-TREMIE DE CHEMIN DE FER COMPRENANT DES MÉCANISMES DE DÉCHARGEMENT SÉLECTIONNABLES

(30) Priorität: 01.07.2014 AT 5252014
(43) Veröffentlichungstag der Anmeldung: 10.05.2017
(73) Patentinhaber: Plasser & Theurer Export von Bahnbaumaschinen Gesellschaft m.b.H., 1010 Wien (AT)
(72) Erfinder: HÖTZENDORFER, Patrick, 4209 Engerwitzdorf (AT)
(86) Internationale Anmeldenummer: PCT/EP2015/001145
(87) Internationale Veröffentlichungsnummer: WO 2016/000806

(56) Entgegenhaltungen:
- EP-A2- 1 083 262
- DE-A1- 3 424 687

## Beschreibung

Die Erfindung betrifft einen Verladewagen zum Aufnehmen, Weitertransportieren und Abwerfen von Schüttgut, mit einem auf Schienenfahrwerken abgestützten Wagenrahmen und einem in einer Wagenlängsrichtung verlaufenden Verteilförderband zum Transport des Schüttgutes zu Abwurfeinrichtungen.

Aus DE 34 24 687 A1 ist eine Gleisbaumaschine mit einem ein Bodenförderband aufweisenden Speicher bekannt. Der darin gespeicherte Schotter wird über Abwurf-Förderbänder und Auslässe in das Gleis eingebracht.

EP 1 083 262 A2 beschreibt einen Verladewagen mit einem zusätzlichen, in Wagenlängsrichtung bewegbaren Abraumförderband.

Aus WO 2013/189564 A1 ist bereits ein Schotterpflug bekannt, der einen Speicher aufweist. Dieser kann über eine Schurre oder über Förderbänder entladen werden.

Aus GB 2 264 275 A und EP 0 096 236 A1 sind weitere Verladewagen ersichtlich.

Die Aufgabe der vorliegenden Erfindung liegt nun in der Schaffung eines Verladewagens der eingangs genannten Art, mit dem ein variantenreicher Abwurf von Schüttgut möglich ist.

Diese Aufgabe wird erfindungsgemäß mit einem Verladewagen der gattungsgemäßen Art durch die im Kennzeichen des Hauptanspruches angeführten Merkmale gelöst.

Mit einem derartigen Verladewagen kann das abzuwerfende Schüttgut wahlweise in das Gleis, seitlich neben das Gleis bzw. auf die Bettungsflanke oder auch auf am Nachbargleis befindliche Wagen abgeworfen werden. Bei entsprechender Ausbildung der dritten Abwurfeinrichtung ist auch ein Abwurf auf am befahrenen Gleis befindliche Wagen möglich. Der Verladewagen kann in Kombination mit einer Reinigungsmaschine oder mit Maschinen zur Gleis- bzw. Planumsanierung eingesetzt werden. Das durch den Verladewagen abgeworfene Schüttgut kann entweder wieder in das Gleis eingebracht werden (z. B. gereinigter Schotter), oder es wird neues Material eingebracht (z. B. neuer Schotter, Kies, Sand). Außerdem ist der Abtransport von nicht mehr benötigtem oder verunreinigtem Material und Abraum möglich.

Weitere Vorteile der Erfindung ergeben sich aus den Unteransprüchen und der Zeichnungsbeschreibung.

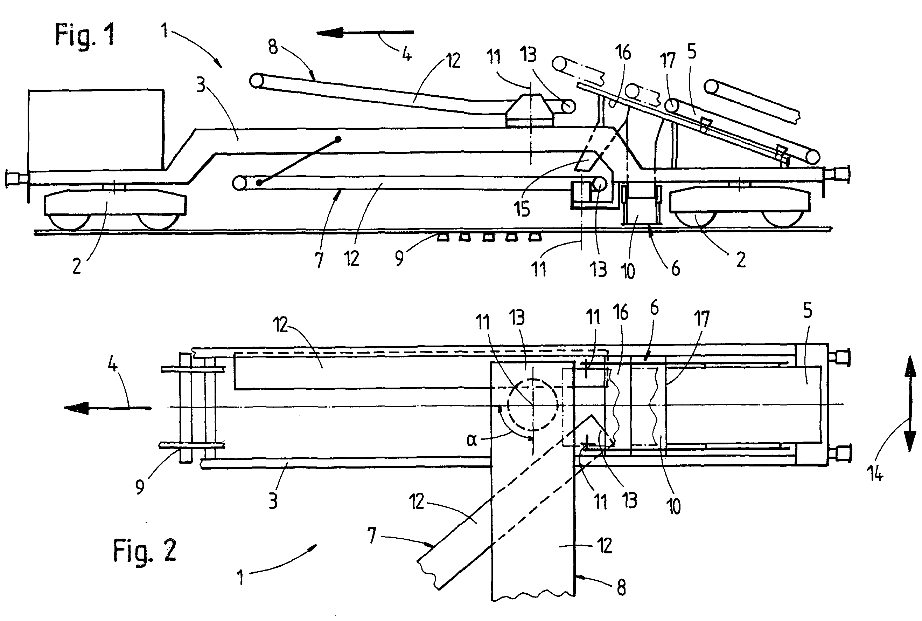

Im Folgenden wird die Erfindung anhand eines in der Zeichnung dargestellten Ausführungsbeispieles näher beschrieben. Es zeigen: Fig. 1 eine Seitenansicht und Fig. 2 eine Draufsicht auf einen Verladewagen.

Ein in Fig. 1 und 2 dargestellter Verladewagen 1 zum Aufnehmen, Weitertransportieren und Abwerfen von Schüttgut besteht im Wesentlichen aus einem auf Schienenfahrwerken 2 abgestützten Wagenrahmen 3. Auf diesem ist ein in einer Wagenlängsrichtung 4 verlaufendes Verteilförderband 5 zum Transport des Schüttgutes zu Abwurfeinrichtungen 6, 7, 8 angeordnet. Für eine wahlweise Beschickung der Abwurfeinrichtungen 6, 7, 8 ist das Verteilförderband 5 in Wagenlängsrichtung 4 verstellbar ausgebildet. Die erste Abwurfeinrichtung 6 ist als oberhalb eines Gleises 9 angeordnete Schurre 10 ausgebildet. Die zweite sowie dritte Abwurfeinrichtung 7, 8 sind als je um eine vertikale Achse 11 verschwenkbares Förderband 12 mit je einem im Bereich der Achsen 11 positionierten Aufnahmeende 13 ausgebildet. Die zweite Abwurfeinrichtung 7 ist unterhalb des Wagenrahmens 3 und die dritte Abwurfvorrichtung 8 ist oberhalb des Wagenrahmens 3 angeordnet.

Die zweite Abwurfvorrichtung 7 besteht aus insgesamt zwei, voneinander unabhängig um vertikale Achsen 11 verschwenkbaren, betreffend eine Wagenquerrichtung 14 nebeneinander angeordneten Förderbändern 12. Das Förderband 12 der dritten Abwurfeinrichtung 8 ist um einen Winkel α von vorzugsweise 90° verschwenkbar ausgebildet. Zwischen Verteilförderband 5 und der unterhalb des Wagenrahmens 3 angeordneten, zweiten Abwurfeinrichtung 7 ist eine Schurre 15 mit einem Aufnahmeende 16, das zwischen einem Abwurfende 17 des Verteilförderbandes 5 und dem Aufnahmeende 13 der oberhalb des Wagenrahmens 3 angeordneten, dritten Abwurfeinrichtung 8 positioniert ist, angeordnet.

Im Betrieb wird - je nach gewünschter Abwurfstelle - das Verteilförderband 5 so verschoben, dass sich dessen Abwurfende 17 unmittelbar oberhalb der entsprechenden Abwurfeinrichtung 6, 7, 8 befindet. Wie in Fig. 1 dargestellt, befindet sich das Abwurfende 17 oberhalb der ersten Abwurfeinrichtung 6. Es erfolgt somit ein Abwurf des Schüttgutes in die Schurre 10, also ein Abwurf von Material in das vom Verladewagen 1 befahrene Gleis 9. Andere Positionen des Verteilförderbandes 5 sind strichpunktiert eingezeichnet. In einer mittleren Position erfolgt der Abwurf über die Schurre 15 auf die zweite Abwurfeinrichtung 7 und von dort seitlich neben das Gleis 9 oder auf dessen Bettungsflanke. In der betreffend die Wagenlängsrichtung 4 vordersten Position erfolgt der Abwurf auf die dritte Abwurfeinrichtung 8. Wenn deren Förderband 12 um den Winkel α von 90° verschwenkt ist, können auf dem Nachbargleis vom Gleis 9 befindliche Wagen beschickt werden. Bei entsprechend langer Ausbildung des Förderbandes 12 der dritten Abwurfeinrichtung 8 ist auch eine Beschickung von am Gleis 9 befindlichen, dem Verladewagen 1 vorgereihten Wagen möglich.

## Patentansprüche

1. Verladewagen (1) zum Aufnehmen, Weitertransportieren und Abwerfen von Schüttgut, mit einem auf Schienenfahrwerken (2) abgestützten Wagenrahmen (3) und einem in einer Wagenlängsrichtung (4) verlaufenden Verteilförderband (5) zum Transport des Schüttgutes zu Abwurfeinrichtungen (6, 7, 8), **dadurch gekennzeichnet, dass**
a) das Verteilförderband (5) für eine wahlweise Beschickung der Abwurfeinrichtungen (6, 7, 8) in Wagenlängsrichtung (4) verschiebbar ausgebildet ist,
b) eine erste Abwurfeinrichtung (6) als oberhalb eines Gleises (9) angeordnete Schurre (10) ausgebildet ist, und
c) eine zweite sowie eine dritte Abwurfeinrichtung (7, 8) als je ein um eine vertikale Achse (11) verschwenkbares Förderband (12) mit je einem im Bereich der Achsen (11) positionierten Aufnahmeende (13) ausgebildet sind.

2. Verladewagen (1) nach Anspruch 1, **dadurch gekennzeichnet, dass** die zweite Abwurfeinrichtung (7) unterhalb des Wagenrahmens (3) und die dritte Abwurfvorrichtung (8) oberhalb des Wagenrahmens (3) angeordnet ist.

3. Verladewagen (1) nach Anspruch 2, **dadurch gekennzeichnet, dass** die zweite Abwurfvorrichtung (7) aus insgesamt zwei, voneinander unabhängig um vertikale Achsen (11) verschwenkbaren, betreffend eine Wagenquerrichtung (14) nebeneinander angeordneten Förderbändern (12) besteht.

4. Verladewagen (1) nach einem der Ansprüche 2 oder 3, **dadurch gekennzeichnet, dass** das Förderband (12) der dritten Abwurfeinrichtung (8) um einen Winkel α von vorzugsweise 90° verschwenkbar ausgebildet ist.

5. Verladewagen (1) nach einem der Ansprüche 1 bis 4, **dadurch gekennzeichnet, dass** zwischen Verteilförderband (5) und der unterhalb des Wagenrahmens (3) angeordneten, zweiten Abwurfeinrichtung (7) eine Schurre (15) mit einem Aufnahmeende (16), das zwischen einem Abwurfende (17) des Verteilförderbandes (5) und einem Aufnahmeende (13) der oberhalb des Wagenrahmens (3) angeordneten, dritten Abwurfeinrichtung (8) positioniert ist, angeordnet ist.

## Claims

1. A loading wagon (1) for picking up, transporting onward and discharging bulk material, including a wagon frame (3) supported on on-track undercarriages (2) and a distributing conveyor belt (5), extending in a longitudinal direction (4) of the wagon, for transporting the bulk material to discharge devices (6, 7, 8), **characterized in that**
a) the distributing conveyor belt (5) is designed to be displaceable in the longitudinal direction (4) of the wagon for selectively charging (5) the discharge devices (6, 7, 8),
b) a first discharge device (6) is designed as a chute (10) arranged above a track (9), and
c) a second as well as a third discharge device (7, 8) are designed in each case as a conveyor belt (12) pivotable about a vertical axis (11), each having a receiving end (13) positioned in the region of the axes (11).

2. A loading wagon (1) according to claim 1, **characterized in that** the second discharge device (7) is arranged underneath the wagon frame (3), and the third discharge device (8) is arranged above the wagon frame (3).

3. A loading wagon (1) according to claim 2, **characterized in that** the second discharge device (7) consists of a total of two conveyor belts (12) pivotable independently of one another about vertical axes (11) and arranged side-by-side with regard to a transverse direction (14) of the wagon.

4. A loading wagon (1) according to one of claims 2 or 3, **characterized in that** the conveyor belt (12) of the third discharge device (8) is designed to be pivotable about an angle α of preferably 90°.

5. A loading wagon (1) according to one of claims 1 to 4, **characterized in that** a chute (15) is arranged between the distributing conveyor belt (5) and the second discharge device (7) arranged underneath the wagon frame (3), the chute (15) having a receiving end (16) positioned between a discharge end (17) of the distributing conveyor belt (5) and a receiving end (13) of the third discharge device (8) arranged above the wagon frame (3).

## Revendications

1. Wagon de chargement (1) pour la réception, la poursuite du transport et l'évacuation de marchandise en vrac, avec un châssis de wagon (3) appuyé sur des mécanismes de roulement ferroviaires (2) et une bande transporteuse de distribution (5) s'étendant dans un sens longitudinal de wagon (4) pour le transport de la marchandise en vrac vers des dispositifs d'évacuation (6, 7, 8), **caractérisé en ce que**
a) la bande transporteuse de distribution (5) est réalisée de manière à pouvoir être coulissée dans le sens longitudinal de wagon (4) pour une alimentation sélective des dispositifs d'évacuation (6, 7, 8),
b) un premier dispositif d'évacuation (6) est réalisé en tant que goulotte (10) disposée au-dessus d'une voie ferrée (9), et
c) un deuxième ainsi qu'un troisième dispositif d'évacuation (7, 8) sont réalisés chacun en tant que bande transporteuse (12) pouvant être pivotée autour d'un axe vertical (11) avec chacune une extrémité de réception (13) positionnée dans la région des axes (11).

2. Wagon de chargement (1) selon la revendication 1, **caractérisé en ce que** le deuxième dispositif d'évacuation (7) est disposé en dessous du châssis de wagon (3) et le troisième dispositif d'évacuation (8) au-dessus du châssis de wagon (3).

3. Wagon de chargement (1) selon la revendication 2, **caractérisé en ce que** le deuxième dispositif d'évacuation (7) se compose au total de deux bandes transporteuses (12) pouvant être pivotées indépendamment l'une de l'autre autour d'axes verticaux (11), disposées de manière juxtaposée en ce qui concerne un sens transversal de wagon (14).

4. Wagon de chargement (1) selon une des revendications 2 ou 3, **caractérisé en ce que** la bande transporteuse (12) du troisième dispositif d'évacuation (8) est réalisée de manière à pouvoir être pivotée d'un angle α de préférence de 90°.

5. Wagon de chargement (1) selon une des revendications 1 à 4, **caractérisé en ce qu'**une goulotte (15) avec une extrémité de réception (16) qui est positionnée entre une extrémité d'évacuation (17) de la bande transporteuse de distribution (5) et une extrémité de réception (13) du troisième dispositif d'évacuation (8) disposé au-dessus du châssis de wagon (3) est disposée entre la bande transporteuse de distribution (5) et le deuxième dispositif d'évacuation (7) disposé en dessous du châssis de wagon (3).
